# EUROPEAN PATENT SPECIFICATION

(11) **EP 4 643 037 B1**
(45) Date of publication and mention of the grant of the patent: **28.10.2026**
(21) Application number: 23833033.6
(22) Date of filing: 13.12.2023
(51) Int. Cl.: F16K 11/044, F16K 15/06, F24D 19/00, F24H 1/18, F28F 19/00, F28G 9/00, F28F 27/02

(54) **DUAL ACTION BACKFLUSH VALVE HAVING LINKED VALVE BODIES**
RÜCKSPÜLVENTIL MIT ZWEI FUNKTIONEN UND VERBUNDENEN VENTILKÖRPERN
SOUPAPE DE RÉTROLAVAGE À DOUBLE ACTION AYANT DES CORPS DE SOUPAPE RELIÉS

(30) Priority: 27.12.2022 US 202263435346 P
(43) Date of publication of application: 05.11.2025
(73) Proprietor: Neoperl GmbH, 79379 Müllheim (DE)
(72) Inventor: HARRISON, Stephen James, Kingston, Ontario K7L 2N1 (CA)
(74) Representative: Mertzlufft-Paufler, Cornelius
(86) International application number: PCT/EP2023/085689
(87) International publication number: WO 2024/141272

(56) References cited:
- CN-A- 106 246 970
- CN-U- 207 034 260
- CN-U- 215 831 202
- CN-U- 215 891 215
- CN-U- 217 153 105
- US-A1- 2017 075 364
- US-A1- 2020 263 880
- US-B2- 7 823 628

## Description

### TECHNICAL FIELD

The present invention relates to passively switched valves that change a state of the valve based on fluid flow. In a particular application, the invention relates to an improved valve for use with thermal energy systems with passive back-flushing of a heat exchanger or other system component.

### BACKGROUND

The inventor has previously developed back-flushing valve assemblies for heat exchangers, such as shown in U.S. 7,823,628; U.S. 7,171,972; and U.S. 6,827,091. These have proved successful in passively backflushing the heat exchanger to clear and/or reduce fouling.

CN 217 153 105 U describes a three-way check valve, that comprises a valve body, a valve core, an elastic piece and a seat body, wherein the valve body is provided with a first connector, a second connector and a third connector which are communicated with each other; the seat body is fixedly arranged in the valve body and is provided with a through hole; the valve core can movably penetrate through the through hole and can open the first connector and block the second connector under the action of water pressure; the elastic piece is propped between the valve core and the seat body to drive the valve core to block the first interface and open the second interface. The utility model discloses a case realizes preventing that two way water inlets from streaming, reduce cost, and the second interface is normally open state, can effectively reduce flow loss when it intakes.

CN 207 034 260 U describes a kind of check valve, including the valve body with hollow channel, the valve body includes the second valve body that one end is arranged to the first valve body of inlet and connected with the first valve body, core assembly is set in first valve body, including valve rod, spring and bottom, the bottom insertion is arranged on the other end of first valve body, sets through hole to form refluxing opening on the bottom.When cooperation is supported in one end of the valve rod with the inlet, the hollow channel of the inlet and first valve body is closed, and the refluxing opening connects with the hollow channel of first valve body ; When the other end of the valve rod supports cooperation with the bottom, the hollow channel of the refluxing opening and first valve body is closed, and the inlet connects with the hollow channel of first valve body. The check valve of the present utility model for being provided with refluxing opening, low is required to sealing technology, when inlet stops feed liquor, can effective emptying valve inner product liquid storage body, it is stable and reliable in work.

CN 215 831 202 U describes a backflow-preventing drainage control mechanism, and belongs to the technical field of machinery. It has solved the current problem that the place that adds water structure is suitable for is few. The backflow-preventing drainage control mechanism comprises a shell with a water passing cavity inside, wherein the shell is further provided with a water inlet, a water outlet and a water outlet, a valve core and an elastic piece are arranged in the water passing cavity, a water inlet communicated with the water inlet and the water passing cavity, a water outlet communicated with the water outlet and the water passing cavity and a drain hole communicated with the water outlet and the water passing cavity are further arranged in the shell, the valve core can be close to the water inlet and block the water inlet under the elastic action of the elastic piece, and the valve core can overcome the elastic action of the elastic piece to move under the hydraulic action of the water inlet to open the water inlet and block the drain hole.

However, improvements in both function and application are needed.

### SUMMARY

In one aspect, the present disclosure is directed to a valve arrangement for communication with first, second, and third fluid regions that is configured to passively switch between first and second operational modes. The valve arrangement includes a first valve body that is biased by a resilient element to a closed position against a first valve seat to close a first flow path between the first fluid region and the second fluid region in the first operational mode, and a second valve body that acts against a second valve seat. In the first operational mode the second valve body is in an open position spaced apart from the second valve seat providing a second flow path between the second and third fluid regions. A functional connection is provided between the second valve body and the first valve body such that movement of the first valve body to the closed position moves the second valve body to the open position, and movement of the first valve body to an open position moves the second valve body to a closed position. In the first operational mode the second valve body is in the open position spaced apart from the second valve seat opening the second flow path between the second and third fluid regions, and in the second operational mode, upon a pressure of a fluid in the first fluid region overcoming a closing force of the resilient element and any pressure force of a fluid in the second fluid region, the first valve body is movable to the open position while simultaneously moving the second valve body to the closed position against the second valve seat such that the first flow path is opened between the first and second fluid regions and the second flow path is closed, isolating the third fluid region from the first and second fluid regions.

This arrangement has specific application as a backflushing valve assembly for thermal systems, and particular benefits for backflushing heat exchangers when mains water is connected to the first fluid region in that it provides positive switching between the different flow paths in a passively activated manner based on the pressure differentials that are generated during routine operation.

In the preferred arrangement, upon the resilient force and any pressure force in the second fluid region overcoming the pressure of the fluid in the first fluid region the valve arrangement is configured to return to the first operational mode.

Preferably, the resilient element is a spring. This could be a separate metallic coil spring, a resilient arm, or a hydraulic or magnetically generated return force.

Preferably, the functional connection is a mechanical link, a magnetic coupling, or a hydraulic or pneumatic connection.

According to the invention, the valve arrangement includes its own fitting body, and the first and second valve seats are located in the fitting body. The first fluid region is located on a first side of the first valve seat, the second fluid region is located on a second side of the first valve seat opposite from the first fluid region and on a first side of the second valve seat, and the third fluid region is located on a second side of the second valve seat opposite from the second fluid region.

Here, the fitting body preferably includes integral fittings or connectors at the first, second, and third fluid regions in order to allow the valve arrangement to be connected, for example by pipes, to a thermal system. These fittings or connectors may be internal or external connecting surfaces that can be smooth (for a solder or brazed connection or the like) or threaded. Other types of clamped, glued, soldered or any other suitable connection can also be used.

In one arrangement not forming part of the claimed invention, one or both of the first and second valve seats are integrally formed in the fitting body. A resilient element support is preferably also located in the fitting body, and the resilient element is arranged between the resilient element support and the first valve body.

The fitting body can be tee-shaped, and the first and second valve seats are preferably located along a same axis in a main passage through the tee. A transverse passage of the tee intersects the main passage at a location between the first and second valve seats.

According to the invention, the first and second valve seats are formed separately and then inserted into the fitting body.

Here, a first valve housing is provided in which the first seat is formed, and a second valve housing is provided in which the second valve seat is formed. The first valve body is located in the first valve housing and the second valve body is located in the second valve housing. The first and second valve housings are insertable into the fitting body. This arrangement with first and second valve housings simplifies the requirements for a fitting body, which can be formed as a tee fitting.

In order to allow for easier handling and reduced loose parts during assembly, the resilient element can be located, and is preferably pre-assembled, in the first valve housing.

In a preferred arrangement, a rod or link extends, preferably linearly, between the first and second valve bodies.

In order to allow adaptation to various applications, in one preferred arrangement, a length of the rod is adjustable.

In one preferred arrangement, a first seal is provided between the first valve housing and a passage wall of the fitting body, and a second seal is provided between the second valve housing and the passage wall of the fitting body. The seals may be o-ring seals, or may be formed of any suitable sealing material.

According to the invention, the first valve seat is provided in a first valve housing that is insertable into the fitting body, while the second valve seat is integrally formed in the fitting body. In this embodiment, the first valve housing can include an outside shoulder that is seated against a corresponding shoulder formed in the fitting body. Here, the first valve housing can include a shaft support for the connecting rod or link to the second valve body, and can also include the resilient element. The first valve housing, the first and second valve bodies, the resilient element, and the connecting rod or link may be pre-assembled for easier handling during assembly with the fitting body.

In another aspect, a method of passively backflushing a flow component, such as a heat exchanger or other component of a thermal energy system is provided, the method includes:

Providing a valve arrangement for communication with first, second, and third fluid regions that is configured to passively switch between first and second operational modes, the valve arrangement including a first valve body that is biased by a resilient element to a closed position against a first valve seat to close a first flow path between the first fluid region and the second fluid region in the first operational mode, a second valve body that acts against a second valve seat, in the first operational mode the second valve body is in an open position spaced apart from the second valve seat providing a second flow path between the second and third fluid regions, and a functional connection between the second valve body and the first valve body such that movement of the first valve body to the closed position moves the second valve body to the open position, and movement of the first valve body to an open position moves the second valve body to a closed position;

Connecting the first fluid region to a mains water supply or pressurized fluid source;

Connecting the second fluid region to an inlet side of a flow component, which in one embodiment is a cooler or inlet side of a heat exchanger of the thermal energy system;

Connecting the third fluid region to an outlet side of the flow component, which in one embodiment is a hotter or outlet side of the heat exchanger of the thermal energy system;

In the first operational mode, holding the second valve body in the open position spaced apart from the second valve seat providing a second flow path between the second and third fluid regions such that flows in a first direction from the cooler or inlet side to the hotter or outlet side via the second flow path by convection or other means as, for example, the fluid on the cooler side is heated or other means causes a flow in this direction; and

In the second operational mode, upon a pressure of a fluid from the mains water supply or other pressurized fluid source in the first fluid region overcoming a closing force of the resilient element and any pressure force of the fluid in the second fluid region, moving the first valve body to the open position while simultaneously moving the second valve body to the closed position against the second valve seat such that the first flow path is opened between the first and second fluid regions and the second flow path is closed, isolating the third fluid region from the first and second fluid regions and providing a flow of the fluid from the mains water supply or other pressurized fluid source in the second fluid region in a second direction, opposite to the first direction.

The method may further include:

Inserting the valve arrangement into a fitting body that defines the first, second, and third regions.

Here, the method can include integrally forming the first and second valve seats in the fitting body. Alternatively, the first and second valve seats can be formed in separate first and second valve housings as discussed above.

In a preferred arrangement, the functional connection is provided as a mechanical link, a magnetic coupling, or a hydraulic or pneumatic connection.

Further, it is preferred that the first and second valve bodies are aligned along a common axis.

The features noted above can be used alone or in various combination to provide.

### BRIEF DESCRIPTION OF THE DRAWINGS

Further advantages and characteristics of the invention will become apparent by the below description of embodiments making reference to the accompanying drawings, in which:
Figure 1 is a schematic view showing a dual action valve arrangement in accordance with the invention that can be used for flow reversal based on pressure differentials, shown in a first operational mode with the first valve closed and the second valve opened in order to allow flow in a positive flow direction between second and third ports or regions of the valve arrangement.
Figure 2 is a schematic view similar to Figure 1 showing the dual action valve arrangement for flow reversal, shown in a second operation mode in which the first valve is opened and the second valve is closed allowing a reverse flow caused by fluid entering the first port or region and exiting the second port or region.
Figure 3 is a cross-sectional view of a valve arrangement not forming part of the claimed invention including a dual-action valve assembly shown in a first operational mode in which the first valve is closed and second valve is opened allowing flow between the second and third fluid regions.
Figure 4 is cross-sectional view similar to Figure 3 of the dual-action valve shown in a second operational mode in which the second valve is closed and the first valve is opened such that fluid can flow from the first fluid region into the second region while the third region is isolated.
Figures 5A and 5B are additional views of the dual-action valve arrangement shown in Figures 3 and 4 showing additional details of a spring support.
Figure 6 is a cross-sectional view showing the dual-action valve arrangement of Figure 3 installed in a fitting body. Here, the dual-action valve arrangement is shown in the first operational mode.
Figure 7 is a view similar to Figure 6 of the dual-action valve arrangement shown in the second operational mode.
Figures 8A and 8B show schematic views, in cross-section, of a further embodiment of a dual-action valve arrangement that is configured for insertion into an existing plumbing component, such as a pipe or a tee, which includes first and second valve housings in which the first and second valve bodies and valve seats are respectively located.
Figures 9A and 9B show the dual-action valve arrangement of Figures 8A and 8B in the first operational mode with a separate spacer located between the first and second valve housings.
Figures 10A and 10B show the dual-action valve arrangement similar to Figures 8A and 8B in which an integrated spacer is connected between the first and second valve housings.
Figure 11 is a view of an alternate embodiment of a dual action valve arrangement shown in Figures 8A and 8B in which the connecting rod between the first and second valve bodies is adjustable.
Figure 12 is a view of a further alternate embodiment of the dual-action valve arrangement shown in Figures 8A and 8B in which the valve rod between the first and second valve bodies is adjustable and the spacer between the first and second valve housings is also adjustable.
Figure 13 is a cross-sectional view through a fitting in which the dual-action valve arrangement shown in Figures 10A and 10B is installed. The valve arrangement is shown in the first operational mode.
Figure 14 is a cross-sectional view similar to Figure 13 showing the dual-action valve arrangement inserted in the opposite direction in the main flow channel of the tee fitting to provide a different operational flow, with the dual-action valve arrangement shown in the first operational position.
Figure 15 is a view similar to Figure 14 showing the dual-action valve arrangement of Figures 10A and 10B with additional features of the plumbing fitting in order to retain the dual-action valve arrangement in position as well as an exemplary application as a backflushing valve in a water heater heat exchanger circuit.

### DETAILED DESCRIPTION

Certain terminology is used in the following description for convenience only and is not limiting. The words "right," "left," "top," and "bottom" designate directions in the drawings to which reference is made. The words "a" and "one," as used in the claims and in the corresponding portions of the specification, are defined as including one or more of the referenced item unless specifically stated otherwise. This terminology includes the words above specifically mentioned, derivatives thereof, and words of similar import. The phrase "at least one" followed by a list of two or more items, such as "A, B, or C," means any individual one of A, B or C as well as any combination thereof. The terms approximately or generally mean within +/- 10% of a specified value unless otherwise noted, and within +/- 25° of a specified angle or direction.

With reference to a valve being "closed", it is noted that in certain embodiments, it may be necessary for some of the pressurized fluid or "mains" flow from the first region, as described below, to enter and leak through the second valve body and/or seat to the third region and this is still considered as the valve being "closed". However, the majority of the fluid cannot pass through a closed valve.

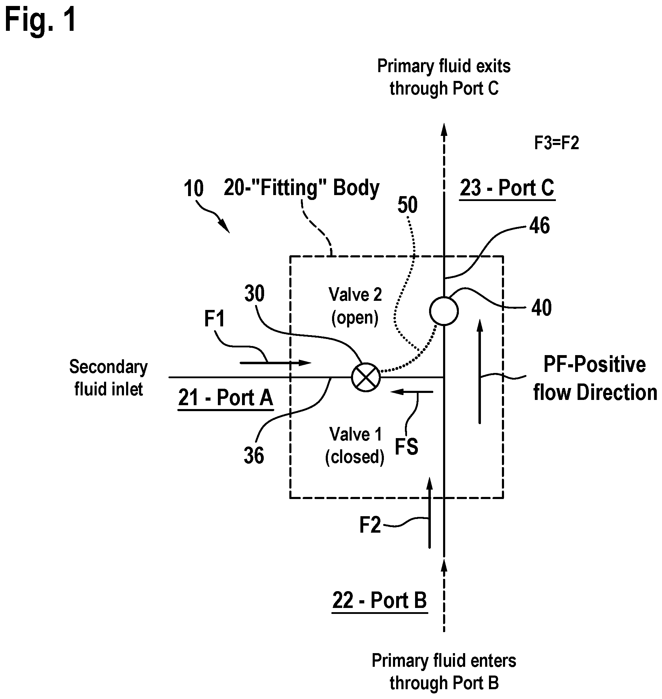

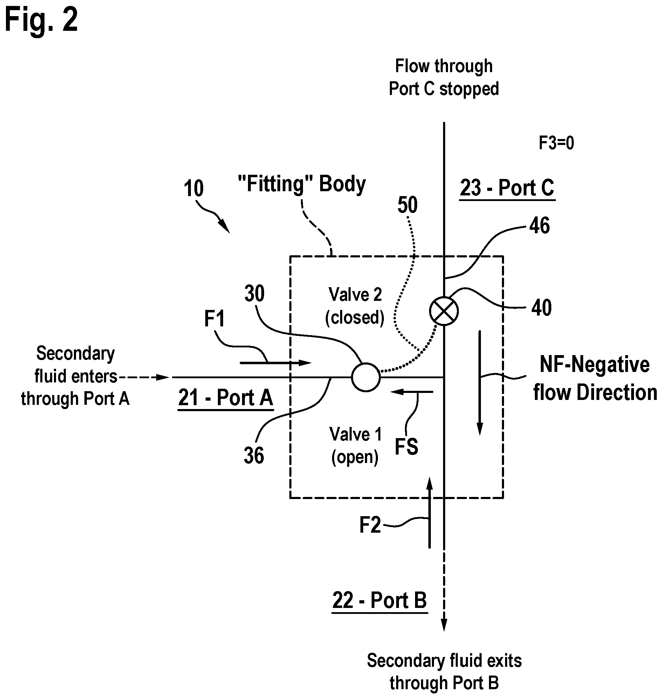

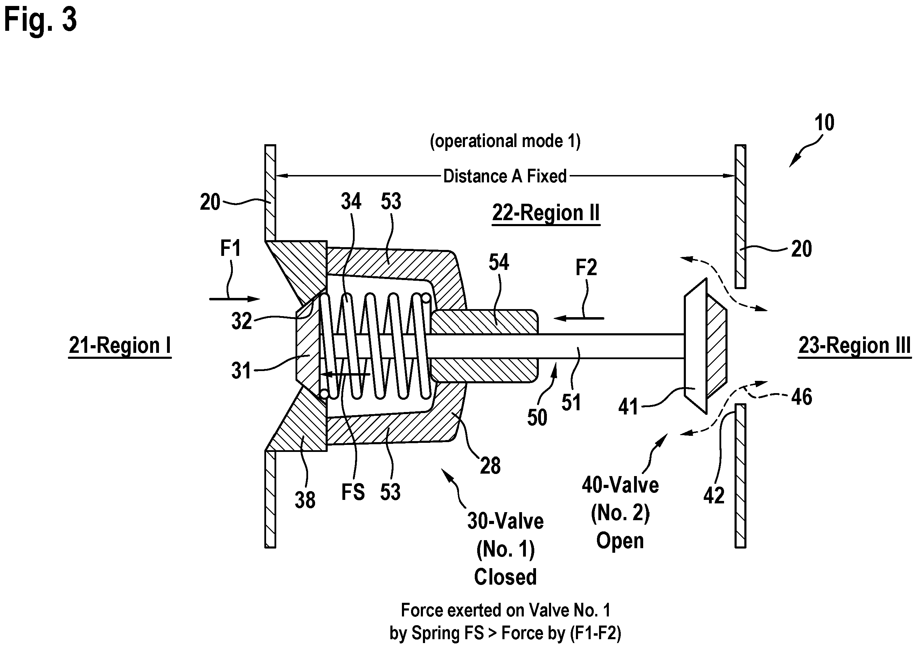

Referring to Figs. 1 and 2, a first embodiment of a dual action valve arrangement 10 is shown somewhat schematically. The valve arrangement 10 is provided between first, second, and third fluid regions 21, 22, 23 (also referred to as "ports" below. The valve arrangement 10 includes a first valve 30, preferably having a valve body 31 and a valve seat 32 (shown in Figs. 3 - 5) as explained in further detail below, that close a first flow path 36 between the first fluid region 21 and the second fluid region 22 in the first operational mode (shown in Fig. 1), as well as a second valve, preferably including a second valve body 41 that acts against a second valve seat 42 (shown in Figs. 3 - 5) as explained in further detail below, that in the first operational mode is in an open position providing a second flow path 46 between the second and third fluid regions 22, 23 (shown in Fig. 1). In a second operational mode, upon a pressure force F1 of a fluid in the first fluid region 21 acting on the first valve body 31 overcoming a closing force of the first valve 30 (which can be a spring force F_{S} provided by a resilient element 34 as discussed below) and any pressure force F₂ of the fluid in the second fluid region 22 acting on the first valve body 31, the first valve 30 moves to the open position while simultaneously closing the second valve 40 such that the first flow path 36 is opened between the first and second fluid regions and the second flow path 46 is closed, isolating the third fluid region 23 from the first and second fluid regions 21, 22.

The dual-action valve arrangement 10 operates simultaneously to open or close in response to the operation conditions imposed on the valve assembly 10. The first and second valves 30, 40 are configured such that the opening of one valve 30 or 40 results in the closing of the other valve 40 or 30 and vice versa. This is preferably accomplished by a functional connection 50 between the valve bodies, as explained in more detail below. It is normal for one of the valves (in these embodiments the first valve 30) to be in the closed position (i.e., the normally closed position, Fig. 1) resulting in the second valve 40 being in the open position (i.e., first operational mode 1, Fig. 1). This condition results in the fluid, in the first fluid region 21, being isolated from the fluid in second and third fluid regions 22, 23, while concurrently allowing the second and third fluid regions 22, 23 to interact, e.g., fluid in the second fluid region 22 may flow into the third fluid region 23 or vice versa. Upon imposition of a pressure differential of sufficient magnitude across the first valve 30 that acts on the first valve body 31 (see Figs. 3 - 5) (i.e., F₁ > F_{S} + F₂), it opens, simultaneously closing the second valve 40 so that the valve arrangement 10 is in the second operational mode, as shown in Fig. 2. Now, the fluid in the third fluid region 22 is isolated from the fluid in the second fluid region 22 while concurrently allowing fluids in the first and second fluids regions 21, 22 to interact, e.g., fluid in the first fluid region 21 may flow into the second fluid region 2I. This results in a flow in the "Negative" flow direction, indicated as NF in Fig. 2.

On the reduction of the pressure force F₁ acting on the first valve body 31, in the first fluid region or the increase of pressure force F₂, acting on the opposite side of the first valve body 31 by a suitable amount (which will act in addition to the spring force F_{S}), the first valve 30 returns to the "normally-closed" position, simultaneously returning the second valve 40 to the normally-open position, thereby returning to the first operational mode.

When the second valve 40 is closed, the primary flow from first fluid region 21 will enter the second fluid region 22 and will flow in the reverse direction NF through, for example, the heat exchanger 12 (described further below) or other flow component. There are cases that may occur in backflush mode, or after, where the pressure in the second fluid region 22 may be greater than in the third fluid region 23 thereby making it difficult for the second valve 40 to return to its open, non-backflush position. This can be overcome by providing a small controlled leakage through the second valve 40 between the second and third fluid regions 22, 23. This can be in the form of a small hole through the valve body and/or around the valve seat etc., The controlled leakage ensures that the pressure is able to equalize after the "draw" has occurred reducing the additional pressure force on the second valve 40 that may be holding it such that second and third fluid regions 22, 23 are isolated

As shown schematically in Figs. 1 and 2, the first valve 30 is located in the first flow path 36 and the second valve 40 is located in the second flow path 46. The first valve 30 is normally closed and the second valve 40 is normally opened. In this configuration, it is common to have a "primary" fluid occasionally or constantly flowing through the second flow path 46, and from, the second fluid region 22 to the third fluid region 23 or vice versa. For clarity, flow from the second fluid region 22 to the third fluid region 23 is designated as flowing in a "positive" flow direction PF in these figures. Flow of the primary fluid through and from second fluid region 22 to the third fluid region 23, can be initiated by a greater pressure in the second fluid region 22 relative to the third fluid region 23. This can occur as a result of the consumption of the primary fluid, or the increase of the pressure in the second fluid region 22 due to an increased "primary fluid" supply pressure, that itself can be caused by a variety of means, e.g., starting of a pump, a change in the elevation of the primary fluid, a change of fluid volume or density arising from a temperature gradient, etc. Specifically, under steady flow conditions, the mass flowrate of fluid entering through port "B" in the second fluid region 22 will equal the mass flowrate exiting through third fluid region 23. (In the case where the fluid is an incompressible liquid, then the volume flowrate through the second fluid region 22 will also be equivalent to the volume flowrate through the third fluid region 23, except for small secondary effects that could occur, e.g., a change in liquid temperature as it passes through the valve assembly.)

The first fluid region 21 is connected to a fluid source, which can be for example mains water, such that it is in contact with the first valve 30 that can be in either of two positions (open or closed) depending on the operational conditions. It is normal for the second valve 40 (located in the second flow path 46) to be in the opposite position to the first valve 30, in the first flow path 36 (i.e., if the first valve 30 is in the closed position, the second valve 40 is in the open position, and if the first valve 30 is in the open position, the second valve 40 is in the closed position). As discussed below, the first and second valves 30, 40 are preferably in a fitting body 20 that is so configured such that fluid can flow between the second and third fluid regions 22, 23 in the first operational mode 1 (i.e., the first valve 30 is closed, and the second valve 40 is open) and there is no potential of fluid flowing from the first fluid region 21 to either, or both, the second or third fluid regions 22, 23 or vice versa.

As discussed above, the first valve 30 is held in the closed position by a "retaining" force F_{S}. The "retaining" force can be provided by a variety of mechanisms including but not limited to: spring, magnetic, gas pressure, bi-metallic element, or gravitational forces, etc.

In the first operational mode, the fluid flow through the first valve 30 is equal to or near zero. In this mode, the fluid flow through the second and third fluid regions 22, 23, may be equal to, or greater than 0, depending on the values of the pressures P2 and P3 in each of these regions. It is assumed that the assembly is not subject to other body forces (e.g., centrifugal, inertial, etc.) of a magnitude that they significantly affect proper operation of the valve assembly.

In the embodiment shown in Figs. 3 - 5, the valve bodies 31, 41 in the first and second valves 30, 40 are shown and are shown connected by a functional connection 50 such as a rigid rod, shaft, or link 51 such that a displacement of one, results in a similar displacement in the other, for example as shown in Fig. 3. Alternatively, the functional connection 50 can be any other suitable mechanical connection between first and second valves 30, 40, hydraulic or pneumatic interaction, spring or shape memory alloys, or magnetic force.

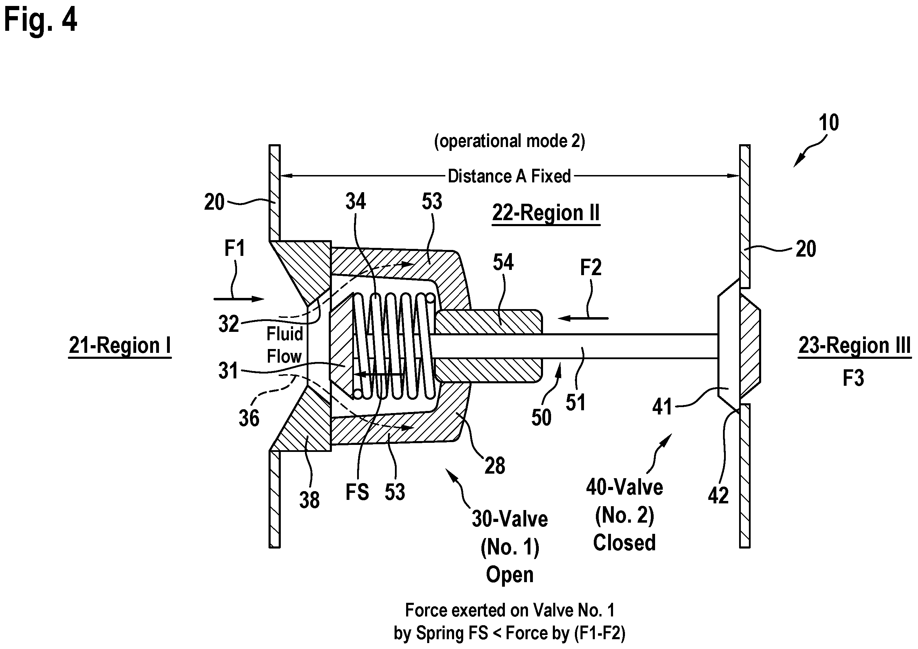

In this embodiment, the force F_{S} exerted by a resilient element 34 such as a spring in the first valve 30 forces the valve body 31 against the valve seat 32 to the normally-closed position (and the second valve 40 is held in the normally-open position) when there is insufficient pressure differential so that the first valve 30 is maintained or returned to the first operational mode. In other embodiments, this additional force F_{S} (when required) may be applied by other means (e.g., magnetic, gas pressure, bi-metallic element, gravitational forces, etc.). As shown in Figures 3 and 4, the distance between the first and second valves 30, 40 is fixed for proper operation and maintained at a distance that allows the valve arrangement 10 to function correctly. The appropriate placement of the valves 30, 40 can be achieved by either adjusting the distance A shown in Fig. 3 or by setting the length of the connecting rod or link 51 to achieve the correct operation of the valve assembly.

The magnitude of the "retaining force" will be selected to assure proper operation of the valve arrangement 10 for a particular application, ensuring that it switches operational modes at the desired operational conditions. In most cases, it is desirable to configure the valve arrangement 10 such that in the second operational mode, the hydrostatic pressure and drag forces associated with the flow of the fluid through the first valve 30 is sufficient to sustain second operational mode until returning to first operational mode. The transition to first operational mode may be caused by the cessation of fluid flow through the first valve 30, and/or the reduction of the pressure gradient across the first valve 30 such that the valve retaining force can close the first valve 30. In certain cases, if a pressure differential (from the second fluid region 22 to the third fluid region 23) occurs in the second operational mode, it may be necessary to configure the second valve 40 such that these effects may be reduced or tuned to a particular application. This could be achieved by adjusting the "face area" of the valve body 41 in the second valve 40 that is exposed to pressure or configuring the second valve 40 such that a controlled leakage through the second valve 40 equalizes the pressure differential between the second and third fluid regions 22, 23 in a specified time period.

The fluid here can be a liquid, a vapor, or a or gas.

The valve arrangement according to the Figs. 3 to 7 is not covered by the claims but is useful to highlight specific aspects of the claims.

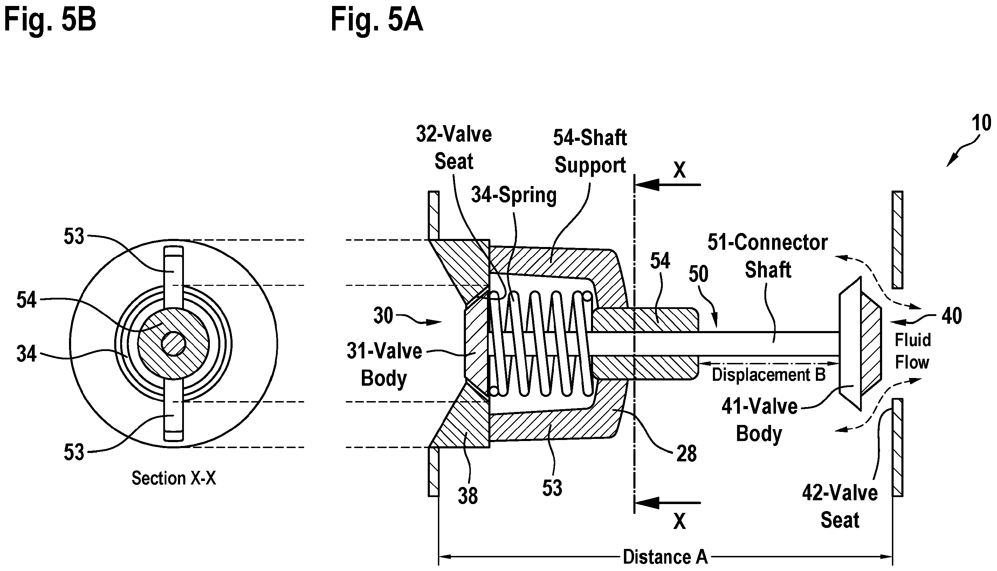

Referring to Figs. 3, 4, 5A, and 5B, the first valve 30 is provided in a first valve housing 38 that includes the first valve seat 32 as well as the resilient element 34 in the form of a spring. The resilient element is held between the first valve body 31 and a resilient element support 28 formed as part of the first valve housing 38. The resilient element support 28 can include two legs 53 that extend from an area of the first valve seat 31 to a rod or shaft support 54. The first valve body 31 is connected to the second valve body 41 via a connecting rod or link 51, although a magnetic coupling or a hydraulic or pneumatic connection could also be used. The second valve seat 42 in this case is integrally formed in a part of the fitting body 20 as shown in detail in Figs. 5A and 5B. The specific operation is as described above in order to provide the first and second operational modes caused by a force differential acting on the first valve body 31 based on the pressure force F₁ acting on the first valve body 31 being greater or less than the combination of F_{S} and F₂, as discussed above causing the valve arrangement to switch between the first and second operational modes.

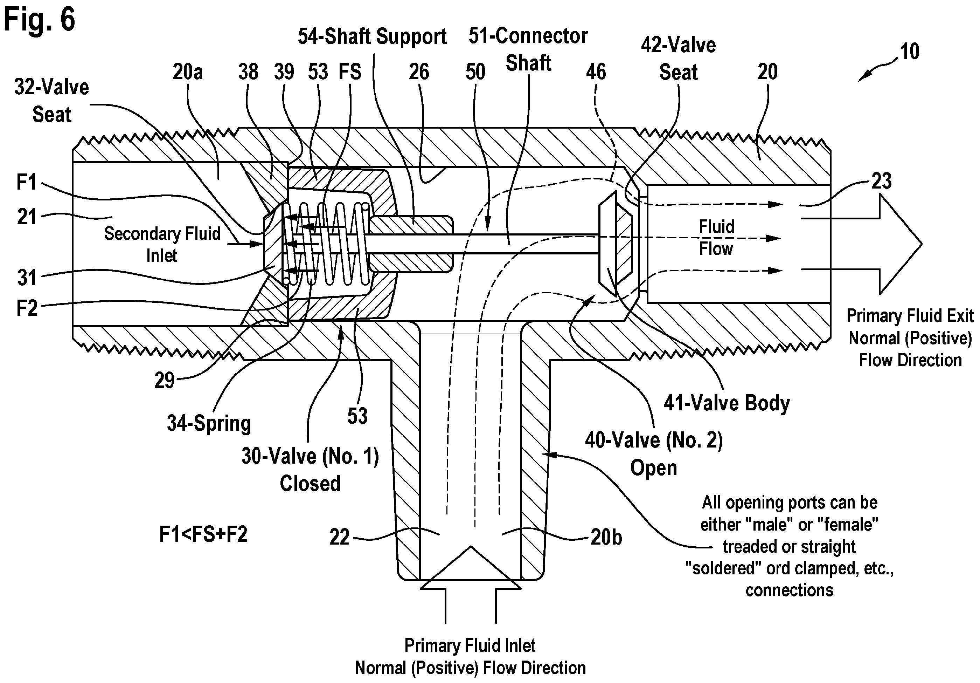

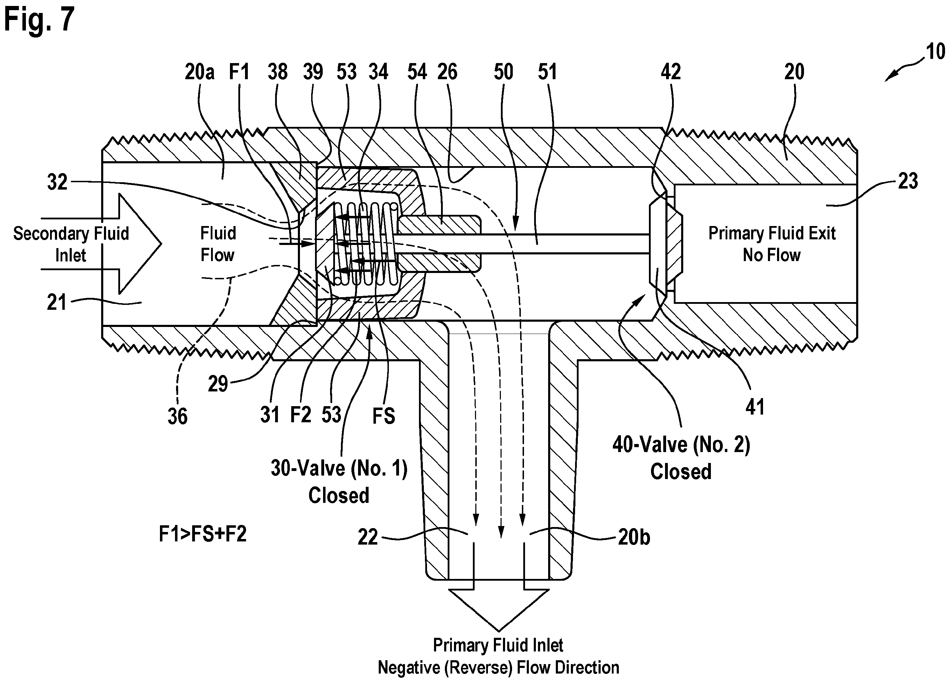

Referring now to Figs. 6 and 7, the dual action valve arrangement 10 of Fig. 3 is shown installed in a fitting body 20 that is tee-shaped. The first and second valve seats 32, 42 are located along a same axis in a main passage 20a through the tee, and a transverse passage 20b of the tee intersects the main passage 20a at a location between the first and second valve seats 32, 42.

The first valve housing 38 preferably includes a shoulder 39 that rests against a corresponding shoulder 29 in a wall 26 of the main passage 20a. The second valve seat 42 is at a fixed distance A from the shoulder in order to control the distance between the first and second valves 30, 40 in order to assure proper functioning.

Here, the first and second valve seats 32, 42 are located in the fitting body 20, and can either be integrally formed or inserted therein. The first fluid region 21 is located on a first side of the first valve seat 32, the second fluid region 22 is located on a second side of the first valve seat 32 opposite from the first fluid region 21 and on a first side of the second valve seat 42, and the third fluid region 23 is located on a second side of the second valve seat 42 opposite from the second fluid region 22.

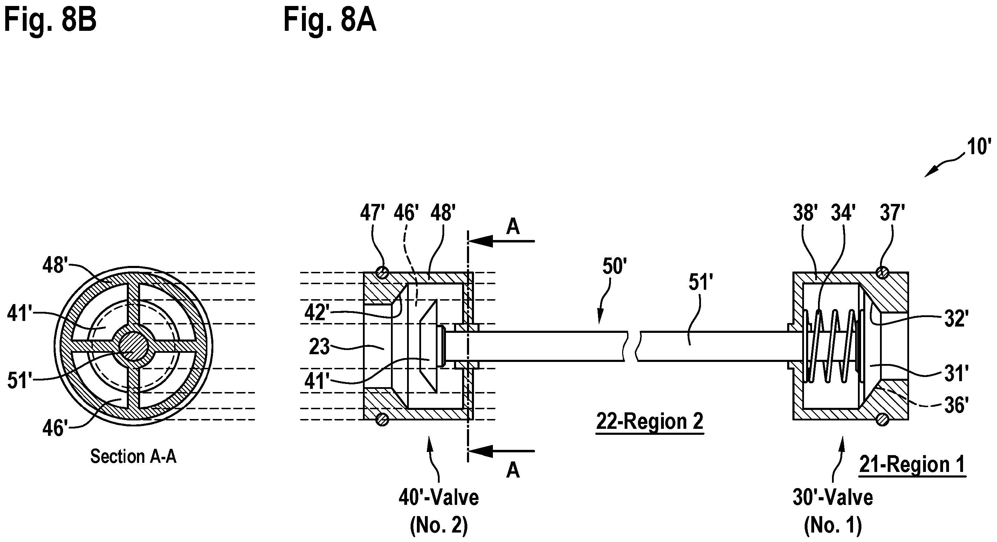

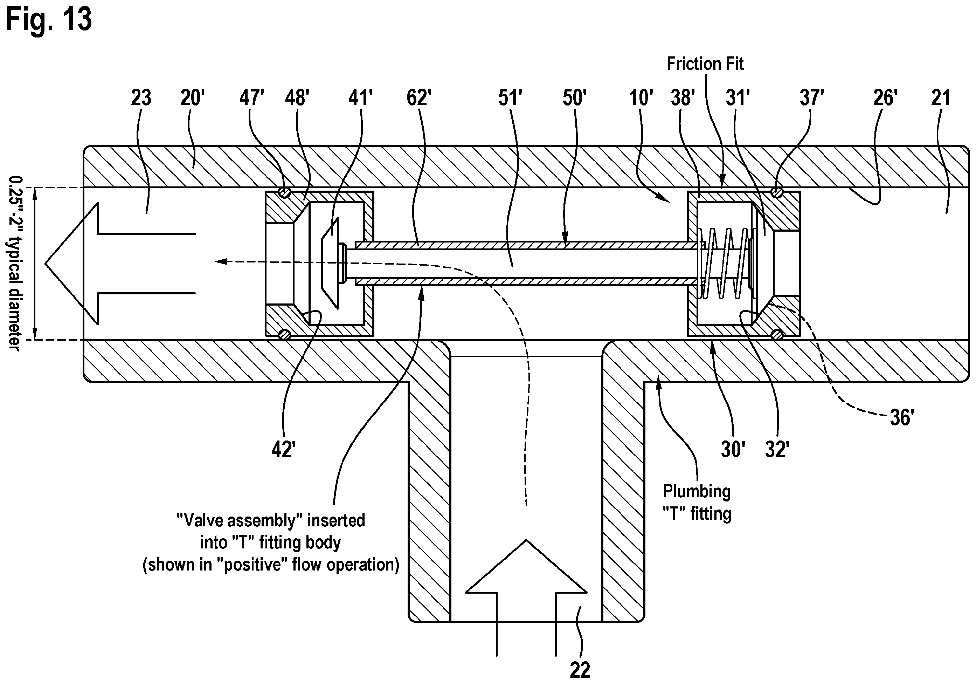

Referring now to Figs. 8A, 8B, 9A, 9B, 10A. 10B, and 11 - 15, a second embodiment of the dual action valve arrangement 10' is shown. The second embodiment of the dual action valve arrangement 10' is similar to the first embodiment, except it is designed to provide an assembly that can be inserted into an existing fitting, device, or assembly that forms the fitting body 20' (see Figs. 13 - 15) with only minor or no modification. Both the first and second valves 30', 40' are provided with respective first and second valve housings 38' 48'. The first seat 32' is formed in the first valve housing 38' and the second seat 42' is formed in the second valve housing 48'. The first valve body 31' is located in the first valve housing 38' and the second valve body 41' is located in the second valve housing 48', and the first and second valve housings 38', 48' are insertable into the fitting body 20', which can be in the form of a standard tee. The first fluid path 36' and the second fluid path 46' are also indicated through the first and second valves 30', 40'.

The functional connection 50' between the first and second valve bodies 31', 41' is preferably in the form of a rod, shaft or link 51'. Preferably, the resilient element 34', in the form of a spring, is located in the first valve housing 38'. In order to allow for a sealed interface between the first, second, and third fluid regions 21, 22, 23 (see in particular Figs. 13 - 15), first and second seals 37', 47' are preferably located on the respective first and second valve housings 38', 48', and are configured to seal against a passage wall 26' of the main passage 20a' of the fitting body 20', as shown In Figs. 13 - 15. To that end, the first and second housings 38', 48' preferably have a cylindrical outer wall and the seals 37', 47' are located in circumferential grooves in the respective cylindrical outer walls and are sized to provide sealing contact with the cylindrical passage wall 26' of the fitting body 20'. It is contemplated that first and second valve housings 38', 48' of different diameters can be produced to match existing internal diameters of passageways of existing fittings, devices or assemblies.

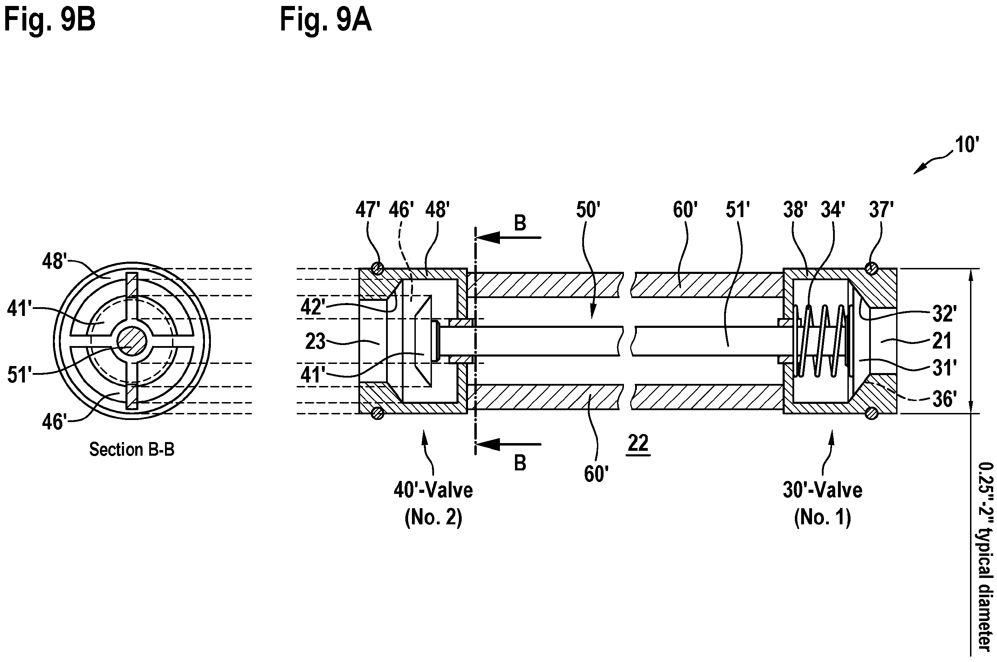

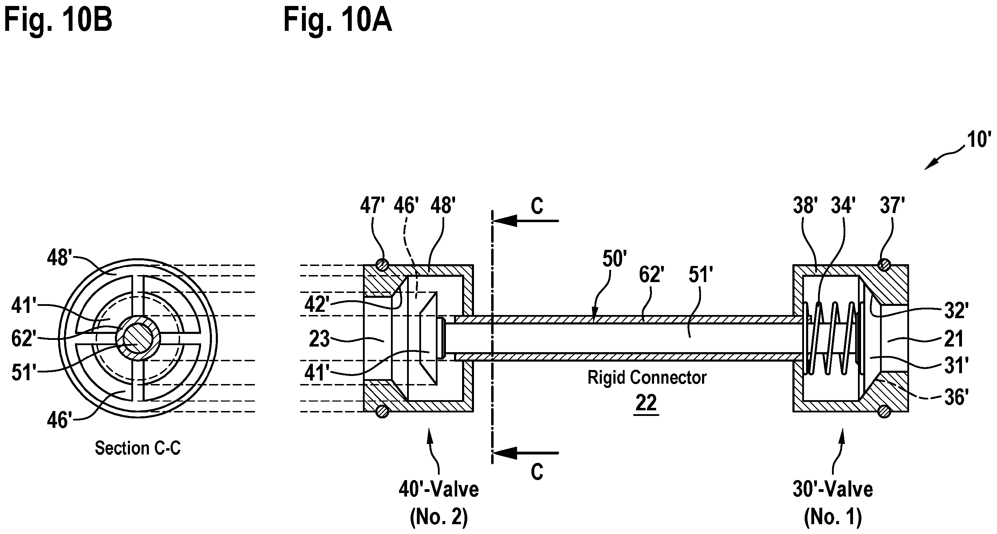

As shown in Figs. 9A and 9B, a separate spacer 60' (two shown) can be located between the first and second valve housings 38', 48' in order to set the proper distance A as discussed above between the first and second valves 30', 40'.. Alternatively, as shown in Figs. 10A and 10B, the spacer 62' can be in the form of a tube that surrounds the rod 51' and is affixed to the first and second valve housings 38', 48'.

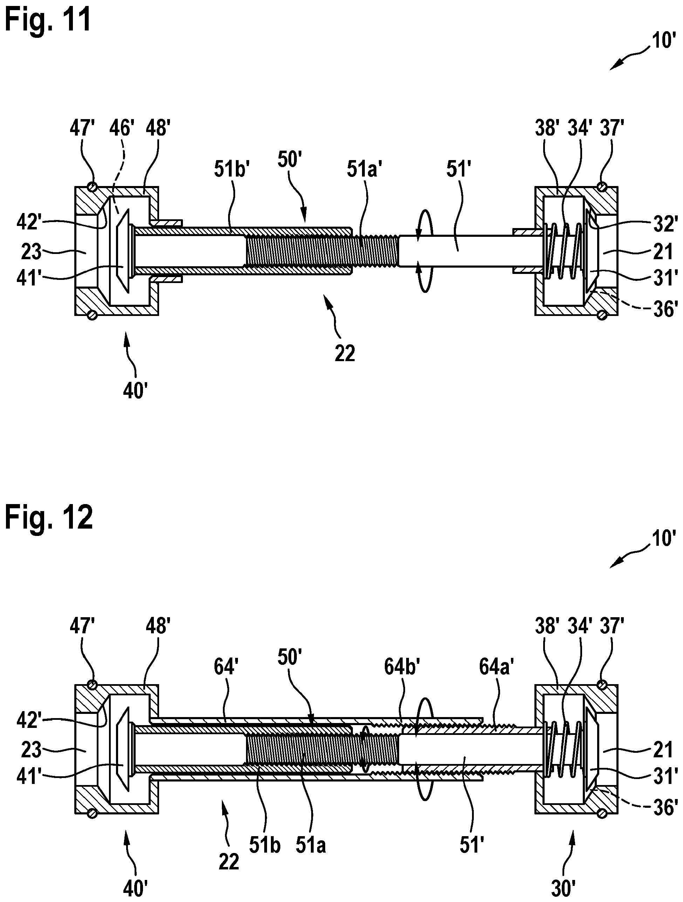

Referring now to Fig. 11, the rod 51' can have an adjustable length, for example by being formed of two parts 51a', 51b', with the first part 51a' including a male thread and the second part 51b' including a female thread. This allows the rod length to be adjusted based on the particular application and the distance A that is specified by variable conditions. This arrangement would also accommodate insertion of the first and second valve housings 38', 48' from opposite ends of a particular fitting body 20' and then being joined together.

Further, as shown in Fig. 12, it is possible to combine the adjustable rod 51' with an adjustable spacer 64' that is also formed in two parts 64a', 64b', with the first part 64a' including a male thread and the second part 64b' including a female thread. This arrangement not only allows the length of the rod 51' to be adjusted, but also allows the distance A to be set in order to accommodate existing conditions in a given existing fitting, device, or assembly that forms the fitting body 20'. This arrangement would also accommodate insertion of the first and second valve housings 38', 48' from opposite ends of a particular fitting body 20' and then being joined together. Other arrangements would also be possible to achieve this adjustability.

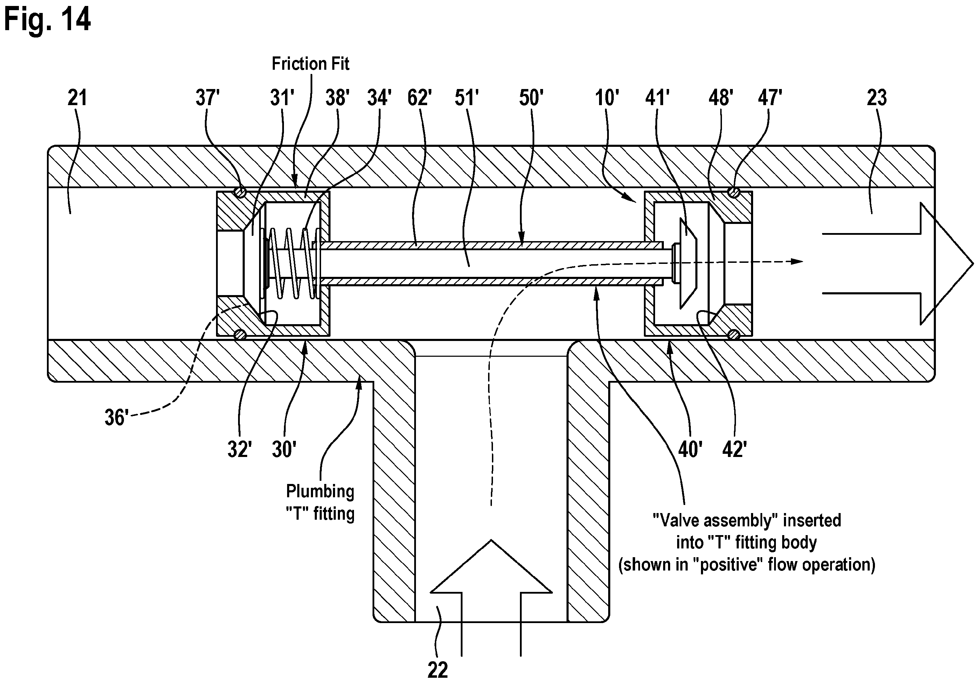

Figures 13 - 15 show the insertion of the valve arrangement 10' in to a "T" shaped pipe fitting or tube (with exit in sidewall) or other fluid devices as the fitting body 20'. The dual action valve arrangement 10' can be inserted in the fitting in either direction to accommodate the end use. The flow of fluid in the "positive" flow direction is indicated by the dotted line in Figures 13 and 14. Preferably, the first and second valve housings 38', 48' are received with a friction fit in the inner wall 26' of the fitting body 20'. Alternatively, other mechanical attachments or arrangements could be used to retain the first and second valve housings 38', 48' in position. For example, a shoulder in the fitting and/or a split ring and groove arrangement could be used.

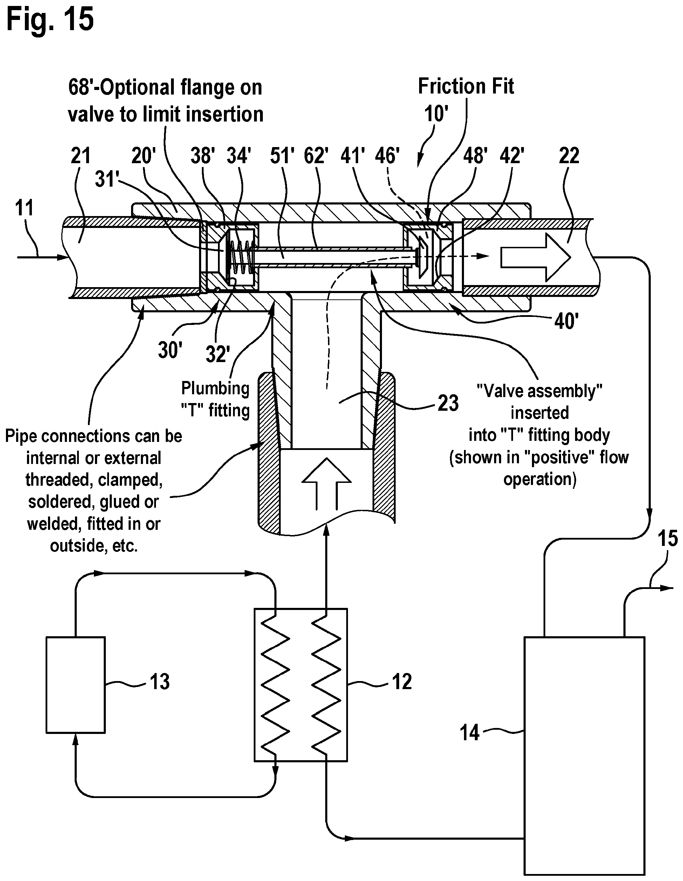

Figure 15 shows typical port fitting options that may exist on pre-existing plumbing components (i.e., "female" internal threaded, "male" exterior threaded or glued or soldered tube "insert", etc.) that could form the fitting body 20' and can be used in any combination to facilitate connection to the piping component equipped with the valve arrangement 10'. An optional flange 68' is shown on the first valve housing 38' that limits insertion depth.

Additionally, Fig. 15 shows one exemplary application where the dual action valve assembly 10' is used as a backflushing valve. Here, a thermal energy system according to the invention is a water heating system, for example, for supplying domestic potable hot water. The primary loop is a closed loop comprising a heat source 13 and suitable tubing or pipes for circulating a heat transfer fluid between the heat source 13 and the primary side of a heat exchanger 12. A pump can optionally be inserted into the primary loop to facilitate circulation of the heat transfer fluid. In some embodiments, such as those employing a water-based heat transfer fluid (e.g., a water-propylene glycol solution), the primary loop additionally comprises an expansion tank (not shown), to compensate for expansion/contraction of the heat transfer fluid as it changes temperature. The secondary loop of the system comprises the secondary side of the heat exchanger 13, a water storage tank 14, and the dual action valve arrangement 10' that acts as a back-flushing control valve. Hot water is drawn from the top of the water storage tank 14 via a pipe or tube 15. Mains water 11 enters the dual action valve arrangement 10' via the first fluid region or port 21 due to the pressure imbalance caused by hot water leaving via the pipe or tube.

As used herein, the term "mains water" refers to water entering the system from a water source, such as a city water distribution network or a well. Mains water enters the secondary loop of the system to be heated or chilled.

Fig. 15 is shown in the first operational mode where the valve arrangement 10' allows hot water to circulate through the second flow path 46' and water is not being drawn from the system via pipe 15, and water is not entering the valve arrangement 10' via the first flow path 36. In this first operational mode, the direction of flow of fluid (in this example, water) is indicated by arrows in FIG. 15. Operation of this embodiment is as follows. When water is not being drawn from the storage tank 14, water circulates through the secondary side of the heat exchanger 12 and the storage tank 14 such that heated water flows upward (in the drawing) through the heat exchanger 12 and the second flow path 46' of the valve arrangement 10' into the top of the tank 14, and out of the bottom of the tank into the heat exchanger 12. This flow can be established by a pump, or by convectionlf a pump is used, it needs to allow reverse flow to occur, for example, by using a known centrifugal pump, or a bypass valve arrangement can be provided

When water is drawn from the storage tank 14, the dual action valve arrangement is passively switched to the second operational mode, opening the first flow path 36' and closing the second flow path 46' due to the pressure imbalance created by drawing water from the hot water tank 14. Pressure of a fluid from the mains water supply in the first fluid region 21 overcomes the closing force F_{S} of the resilient element 34' and any pressure force F₂ of the fluid in the second fluid region 22, moving the first valve body 31' to the open position while simultaneously moving the second valve body 41' to the closed position against the second valve seat 42' such that the first flow path 36' is opened between the first and second fluid regions 21, 22 and the second flow path 46' is closed. The mains water is then routed through the secondary side of the heat exchanger 12 and enters the storage tank 14 at the bottom. Moreover, the flow of mains water through the secondary side of the heat exchanger 12 is in the opposite direction to the flow of water during heating (when mains water is not being drawn into the system). This opposite direction of flow provides passive back-flushing of the secondary side of the heat exchanger 12. Thus, each time water is drawn from the storage tank 14, the secondary side of the heat exchanger 12 is passively back-flushed.

This backflushing could also be accomplished using the dual action valve arrangement 10 in the same manner.

In another aspect, a method of passively backflushing a flow component, such as a heat exchanger 12 of a thermal energy system, is provided. The method includes:
A. providing a valve arrangement 10, 10' for communication with first, second, and third fluid regions 21, 22, 23 that is configured to passively switch between first and second operational modes, with the valve arrangement 10, 10' including a first valve 30, 30', preferably including a first valve body 31, 31' that is biased by a resilient element 34 to a closed position against a first valve seat 32, 32', to close a first flow path between the first fluid region 21 and the second fluid region 22 in the first operational mode, and a second valve 40, 40', preferably including a second valve body 41, 41' body that acts against a second valve seat 42, 42'. In the first operational mode the second valve 40, 40' is in an open position, preferably with the second valve body 41, 41' spaced apart from the second valve seat 42, 42', providing a second flow path 46 between the second and third fluid regions 22, 23. A functional connection 50, 50' is provided between the first and second valves 30, 30' and 40, 40', and more preferably between the second valve body 41, 41' and the first valve body 31, 31', such that movement of the first valve body 31, 31' to the closed position moves the second valve body 41, 41' to the open position, and movement of the first valve body 31, 31' to an open position moves the second valve body 41, 41' to a closed position;
B. connecting the first fluid region 21 to a mains water supply or pressurized fluid source;
C. connecting the second fluid region 22 to an inlet side of the flow component, which in one embodiment is a cooler side of the heat exchanger 12 of the thermal energy system;
D. connecting the third fluid region 23 to an outlet side of the flow component, which in one embodiment is a hotter side of the heat exchanger 12 of the thermal energy system;
E. in the first operational mode, holding the second valve body 41, 41' in the open position spaced apart from the second valve seat 42, 42' providing a second flow path 46 between the second and third fluid regions 22, 23 such that fluid flows in a first direction from the cooler or inlet side to the hotter or outlet side via the second flow path by convection or other means, for example, as the fluid on the cooler side is heated or other means causes a flow in this direction; and
F. in the second operational mode, upon a pressure of a fluid from the mains water supply or other pressurized fluid source in the first fluid region 21 overcoming a closing force F_{S} of the resilient element 34 and any pressure force F₂ of the fluid in the second fluid region 22, moving the first valve body 31, 31' to the open position while simultaneously moving the second valve body 41, 41' to the closed position against the second valve seat 42, 42' such that the first flow path 36 is opened between the first and second fluid regions 21, 22 and the second flow path 46 is closed, isolating the third fluid region 23 from the first and second fluid regions 21, 22 and providing a flow of the fluid from the mains water supply or other pressurized fluid source into the second fluid region 22 in a second direction, opposite to the first direction.

The method can further include inserting the valve arrangement into a fitting body 20, 20' that defines the first, second, and third regions 21, 22, 23.

In one preferred embodiment, the method further includes integrally forming at least one of the first and second valve seats 32, 42 in the fitting body.

In one preferred arrangement, the method further includes the functional connection 50 being provided as a mechanical link 51, a magnetic coupling, or a hydraulic or pneumatic connection.

In connection with the second embodiment of the fitting arrangement 10', the method can further include inserting first and second valve housings 38, 38 into a passage of the fitting body 20'.

It will be appreciated that the foregoing is presented by way of illustration only and not by way of any limitation. It is contemplated that various alternatives and modifications may be made to the described embodiments without departing from the scope of the invention as defined by the claims. Having thus described the present invention in detail, it is to be appreciated and will be apparent to those skilled in the art that many physical changes, only a few of which are exemplified in the detailed description of the invention, could be made without altering the inventive concepts and principles embodied therein. It is also to be appreciated that numerous embodiments incorporating only part of the preferred embodiment are possible which do not alter, with respect to those parts, the inventive concepts and principles embodied therein. The present embodiment and optional configurations are therefore to be considered in all respects as exemplary and/or illustrative and not restrictive, the scope of the invention being indicated by the appended claims rather than by the foregoing description.

## Claims

1. A valve arrangement (10; 10') for communication with first (21), second (22), and third (23) fluid regions that is configured to passively switch between first and second operational modes, the valve arrangement comprising:
a first valve body (31') that is biased by a resilient element (34') to a closed position against a first valve seat (32') to close a first flow path (36) between the first fluid region (21) and the second fluid region (22) in the first operational mode;
a second valve body (41') that acts against a second valve seat (42'), in the first operational mode the second valve body (41') is in an open position spaced apart from the second valve seat (42') providing a second flow path (46) between the second (22) and third (23) fluid regions;
a functional connection (50, 50') between the second valve body (41') and the first valve body (31') such that movement of the first valve body (31') to the closed position moves the second valve body (41') to the open position, and movement of the first valve body (31') to an open position moves the second valve body (41') to a closed position;
a fitting body (20; 20'), the first (32') and second valve seats (42') are inserted into the fitting body (20; 20'), and the first fluid region (21) being located on a first side of the first valve seat (32'), the second fluid region (22) being located on a second side of the first valve seat (32') opposite from the first fluid region (21) and on a first side of the second valve seat (42'), and the third fluid region (23) being located on a second side of the second valve seat (42') opposite from the second fluid region (22);
a first valve housing (38') in which the first valve seat (32') is formed, and a second valve housing (48') in which the second valve seat (42') is formed, the first valve body (31') is located in the first valve housing (38') and the second valve body (41') is located in the second valve housing (48'), and the first (38') and second (48') valve housings are insertable into the fitting body (20; 20'); and
a first seal (37') between the first valve housing (38') and a passage wall of the fitting body (20; 20'), and a second seal (47') between the second valve housing (48') and the passage wall of the fitting body (20; 20'),
wherein in the first operational mode the second valve body (41') is in the open position spaced apart from the second valve seat (42') opening the second flow path (46) between the second (22) and third (23) fluid regions, and
in the second operational mode, upon a pressure of a fluid in the first fluid region (21) overcoming a closing force of the resilient element (34') and any pressure force of a fluid in the second fluid region (22), the first valve body (31') is movable to the open position while simultaneously moving the second valve body (41') to the closed position against the second valve seat (42') such that the first flow path (36) is opened between the first (21) and second (22) fluid regions and the second flow path (46) is closed, isolating the third fluid region (23) from the first (21) and second (22) fluid regions.

2. The valve arrangement of claim 1, wherein upon the resilient force and any pressure force in the secondary fluid region overcoming the pressure of the fluid in the first fluid region, the valve arrangement is configured to return to the first operational mode.

3. The valve arrangement of claim 1, wherein the resilient element (34') is a spring and/or is located in the first valve housing (38').

4. The valve arrangement of claim 1, wherein the functional connection (50; 50') is a mechanical link (51'), a magnetic coupling, or a hydraulic or pneumatic connection.

5. The valve arrangement of claim 1, wherein the functional connection (50; 50') comprises a rigid member extending between the first and second valve bodies.

6. The valve arrangement of claim 5, wherein the functional connection (50; 50') is a rod or link that extends between the first (31') and second (41') valve bodies.

7. The valve arrangement of claim 6, wherein a length of the rod is adjustable.

8. The valve arrangement of claim 6, further comprising a resilient element support located in the fitting body (20; 20'), and the resilient element (34') is arranged between the resilient element support and the first valve body (31).

9. The valve arrangement of claim 1, wherein the fitting body (20; 20') is tee-shaped, and the first (32') and second ( 42') valve seats are located along a same axis in a main passage through the tee, and a transverse passage of the tee intersects the main passage at a location between the first (32') and second ( 42') valve seats.

10. A valve arrangement (10; 10') for communication with first (21), second (22), and third (23) fluid regions that is configured to passively switch between first and second operational modes, the valve arrangement comprising:
a first valve body (31') that is biased by a resilient element (34') to a closed position against a first valve seat (32') to close a first flow path (36) between the first fluid region (21) and the second fluid region (22) in the first operational mode;
a second valve body (41') that acts against a second valve seat (42'), in the first operational mode the second valve body (41') is in an open position spaced apart from the second valve seat (42') providing a second flow path (46) between the second (22) and third (23) fluid regions;
a functional (50; 50') connection between the second valve body (41') and the first valve body (31') such that movement of the first valve body (31') to the closed position moves the second valve body (41') to the open position, and movement of the first valve body (31') to an open position moves the second valve body (41') to a closed position;
a fitting body (20; 20'), the first (32') and second valve seats are inserted into the fitting body, and the first fluid region (21) being located on a first side of the first valve seat (32'), the second fluid (22) region being located on a second side of the first valve seat (32') opposite from the first fluid region (21) and on a first side of the second valve seat (42'), and the third fluid region being located on a second side of the second valve seat (42') opposite from the second fluid region (22);
a first valve housing (38') in which the first valve seat (32') is formed, and a second valve housing (48') in which the second valve seat (42') is formed, the first valve body (31') is located in the first valve housing (38') and the second valve body (41') is located in the second valve housing (48'), and the first (38') and second (48') valve housings are insertable into the fitting body (20; 20'); and
at least one spacer (60'; 62'; 64') located between the first (38') and second (48') valve housings; wherein in the first operational mode the second valve body (41') is in the open position spaced apart from the second valve seat (42') opening the second flow path (46) between the second (22) and third (23) fluid regions, and
in the second operational mode, upon a pressure of a fluid in the first fluid region (21) overcoming a closing force of the resilient element (34') and any pressure force of a fluid in the second fluid region (22), the first valve body (31') is movable to the open position while simultaneously moving the second valve body (41') to the closed position against the second valve seat (42') such that the first flow path (36) is opened between the first (21) and second (22) fluid regions and the second flow path (46) is closed, isolating the third fluid region (23) from the first (21) and second (22) fluid regions.

11. The valve arrangement of claim 10, wherein the functional connection (50; 50') is a rod or link (51') that extends between the first (31') and second (41') valve bodies.

12. The valve arrangement of claim 11, wherein the spacer (60'; 62'; 64') comprises a tube that surrounds the rod and is affixed to the first (38') and second ( 48') valve housings.

13. A method of passively backflushing a flow component or backflushing a heat exchanger (12) of a thermal energy system, the method comprising:
providing a valve arrangement (10; 10') for communication with first (21), second (22), and third (23) fluid regions that is configured to passively switch between first and second operational modes, the valve arrangement (10; 10') including a first valve body (31; 31') that is biased by a resilient element (34; 34') to a closed position against a first valve seat (32; 32') to close a first flow path (36) between the first fluid region (21) and the second fluid region (22) in the first operational mode, a second valve body (41; 41') that acts against a second valve seat (42; 42'), in the first operational mode the second valve body (41; 41') is in an open position spaced apart from the second valve seat (42; 42') providing a second flow path (46) between the second (22) and third (23) fluid regions, and a functional connection (50; 50') between the second valve body (41; 41') and the first valve body (31; 31') such that movement of the first valve body (31; 31') to the closed position moves the second valve body (41; 41') to the open position, and movement of the first valve body (31; 31') to an open position moves the second valve body (41; 41') to a closed position;
connecting the first fluid region (21) to a mains water supply or pressurized fluid source;
connecting the second fluid region (22) to an inlet of the flow component or an inlet or cooler side of the heat exchanger (12) of the thermal energy system;
connecting the third fluid (23) region to an outlet of the flow component or an outlet of hotter side of the heat exchanger (12) of the thermal energy system;
in the first operational mode, holding the second valve body (41; 41') in the open position spaced apart from the second valve seat (42; 42') providing a second flow path (46) between the second (22) and third (23) fluid regions such that fluid flows in a first direction from the inlet or cooler side to the outlet or hotter side via the second flow path (46) by convection or other means; and
in the second operational mode, upon a pressure of a fluid from the mains water supply or other pressurized fluid source in the first fluid region (21) overcoming a closing force of the resilient element (34; 34') and any pressure force of the fluid in the second fluid region (22), moving the first valve body (31; 31') to the open position while simultaneously moving the second valve body (41; 41') to the closed position against the second valve seat (42; 42') such that the first flow path (36) is opened between the first (21) and second (22) fluid regions and the second flow path (46) is closed, isolating the third fluid region (23) from the first (21) and second (22) fluid regions and providing a flow of the fluid from the mains water supply or other pressurized fluid source in the second fluid region (22) in a second direction, opposite to the first direction.

14. The method of claim 13, further comprising:
inserting the valve arrangement (10; 10') into a fitting body (20; 20') that defines the first (21), second (22), and third (23) regions.

15. The method of claim 14, further comprising integrally forming the first (32; 32') and second (42; 42') valve seats in the fitting body (20; 20').

## Patentansprüche

1. Ventilanordnung (10; 10') zur Kommunikation mit einem ersten (21), einem zweiten (22) und einem dritten (23) Fluidbereich, die dafür ausgelegt ist, passiv zwischen einem ersten und einem zweiten Betriebsmodus umzuschalten, wobei die Ventilanordnung Folgendes umfasst:
einen ersten Ventilkörper (31'), der durch ein elastisches Element (34') in eine geschlossene Position gegen einen ersten Ventilsitz (32') vorgespannt ist, um im ersten Betriebsmodus einen ersten Strömungsweg (36) zwischen dem ersten Fluidbereich (21) und dem zweiten Fluidbereich (22) zu schließen;
einen zweiten Ventilkörper (41'), der gegen einen zweiten Ventilsitz (42') wirkt, wobei sich im ersten Betriebsmodus der zweite Ventilkörper (41') in einer vom zweiten Ventilsitz (42') beabstandeten offenen Position befindet und einen zweiten Strömungsweg (46) zwischen dem zweiten (22) und dem dritten (23) Fluidbereich bereitstellt;
eine funktionelle Verbindung (50, 50') zwischen dem zweiten Ventilkörper (41') und dem ersten Ventilkörper (31'), sodass eine Bewegung des ersten Ventilkörpers (31') in die geschlossene Position den zweiten Ventilkörper (41') in die offene Position bewegt und eine Bewegung des ersten Ventilkörpers (31') in eine offene Position den zweiten Ventilkörper (41') in eine geschlossene Position bewegt;
einen Armaturenkörper (20; 20'), wobei der erste (32') und der zweite Ventilsitz (42') in den Armaturenkörper (20; 20') eingesetzt sind und der erste Fluidbereich (21) auf einer ersten Seite des ersten Ventilsitzes (32') angeordnet ist, wobei der zweite Fluidbereich (22) auf einer zweiten Seite des ersten Ventilsitzes (32') angeordnet ist, die sich gegenüber dem ersten Fluidbereich (21) und auf einer ersten Seite des zweiten Ventilsitzes (42') befindet, und wobei der dritte Fluidbereich (23) auf einer zweiten Seite des zweiten Ventilsitzes (42') angeordnet ist, die sich gegenüber dem zweiten Fluidbereich (22) befindet;
ein erstes Ventilgehäuse (38'), in dem der erste Ventilsitz (32') ausgebildet ist, und ein zweites Ventilgehäuse (48'), in dem der zweite Ventilsitz (42') ausgebildet ist, wobei der erste Ventilkörper (31') im ersten Ventilgehäuse (38') angeordnet ist und der zweite Ventilkörper (41') im zweiten Ventilgehäuse (48') angeordnet ist, und wobei das erste (38') und das zweite (48') Ventilgehäuse in den Armaturenkörper (20; 20') einsetzbar sind; und
eine erste Dichtung (37') zwischen dem ersten Ventilgehäuse (38') und einer Durchgangswand des Armaturenkörpers (20; 20') und eine zweite Dichtung (47') zwischen dem zweiten Ventilgehäuse (48') und der Durchgangswand des Armaturenkörpers (20; 20'),
wobei sich im ersten Betriebsmodus der zweite Ventilkörper (41') in der von dem zweiten Ventilsitz (42') beabstandeten offenen Position befindet und den zweiten Strömungsweg (46) zwischen dem zweiten (22) und dem dritten (23) Fluidbereich öffnet, und
wobei im zweiten Betriebsmodus, sobald ein Druck eines Fluids im ersten Fluidbereich (21) eine Schließkraft des elastischen Elements (34') und jegliche Druckkraft eines Fluids im zweiten Fluidbereich (22) überwindet, der erste Ventilkörper (31') in die offene Position bewegbar ist, während gleichzeitig der zweite Ventilkörper (41') in die geschlossene Position gegen den zweiten Ventilsitz (42') bewegt wird, sodass der erste Strömungsweg (36) zwischen dem ersten (21) und dem zweiten (22) Fluidbereich geöffnet wird und der zweite Strömungsweg (46) geschlossen wird, wodurch der dritte Fluidbereich (23) vom ersten (21) und vom zweiten (22) Fluidbereich isoliert wird.

2. Ventilanordnung nach Anspruch 1, wobei, sobald die Federkraft und jegliche Druckkraft im zweiten Fluidbereich den Druck des Fluids im ersten Fluidbereich überwinden, die Ventilanordnung dafür ausgelegt ist, in den ersten Betriebsmodus zurückzukehren.

3. Ventilanordnung nach Anspruch 1, wobei das elastische Element (34') eine Feder ist und/oder im ersten Ventilgehäuse (38') angeordnet ist.

4. Ventilanordnung nach Anspruch 1, wobei die funktionelle Verbindung (50; 50') ein mechanisches Verbindungsglied (51'), eine magnetische Kupplung oder eine hydraulische oder pneumatische Verbindung ist.

5. Ventilanordnung nach Anspruch 1, wobei die funktionelle Verbindung (50; 50') ein starres Glied umfasst, das sich zwischen dem ersten und dem zweiten Ventilkörper erstreckt.

6. Ventilanordnung nach Anspruch 5, wobei die funktionelle Verbindung (50; 50') eine Stange oder ein Verbindungsglied ist, die oder das sich zwischen dem ersten (31') und dem zweiten (41') Ventilkörper erstreckt.

7. Ventilanordnung nach Anspruch 6, wobei eine Länge der Stange einstellbar ist.

8. Ventilanordnung nach Anspruch 6, ferner umfassend eine im Armaturenkörper (20; 20') angeordnete Halterung für das elastische Element, wobei sich das elastische Element (34') zwischen der Halterung für das elastische Element und dem ersten Ventilkörper (31') befindet.

9. Ventilanordnung nach Anspruch 1, wobei der Armaturenkörper (20; 20') T-förmig ist und der erste (32') und der zweite (42') Ventilsitz entlang einer gleichen Achse in einem Hauptkanal durch das T-Stück angeordnet sind, und wobei ein Querkanal des T-Stücks den Hauptkanal an einer Stelle zwischen dem ersten (32') und dem zweiten (42') Ventilsitz schneidet.

10. Ventilanordnung (10; 10') zur Kommunikation mit einem ersten (21), einem zweiten (22) und einem dritten (23) Fluidbereich, die dafür ausgelegt ist, passiv zwischen einem ersten und einem zweiten Betriebsmodus umzuschalten, wobei die Ventilanordnung Folgendes umfasst:
einen ersten Ventilkörper (31'), der durch ein elastisches Element (34') in eine geschlossene Position gegen einen ersten Ventilsitz (32') vorgespannt ist, um im ersten Betriebsmodus einen ersten Strömungsweg (36) zwischen dem ersten Fluidbereich (21) und dem zweiten Fluidbereich (22) zu schließen;
einen zweiten Ventilkörper (41'), der gegen einen zweiten Ventilsitz (42') wirkt, wobei sich im ersten Betriebsmodus der zweite Ventilkörper (41') in einer vom zweiten Ventilsitz (42') beabstandeten offenen Position befindet und einen zweiten Strömungsweg (46) zwischen dem zweiten (22) und dem dritten (23) Fluidbereich bereitstellt;
eine funktionelle Verbindung (50, 50') zwischen dem zweiten Ventilkörper (41') und dem ersten Ventilkörper (31'), sodass eine Bewegung des ersten Ventilkörpers (31') in die geschlossene Position den zweiten Ventilkörper (41') in die offene Position bewegt und eine Bewegung des ersten Ventilkörpers (31') in eine offene Position den zweiten Ventilkörper (41') in eine geschlossene Position bewegt;
einen Armaturenkörper (20; 20'), wobei der erste (32') und der zweite Ventilsitz in den Armaturenkörper eingesetzt sind und der erste Fluidbereich (21) auf einer ersten Seite des ersten Ventilsitzes (32') angeordnet ist, wobei der zweite Fluidbereich (22) auf einer zweiten Seite des ersten Ventilsitzes (32') angeordnet ist, die sich gegenüber dem ersten Fluidbereich (21) und auf einer ersten Seite des zweiten Ventilsitzes (42') befindet, und wobei der dritte Fluidbereich (23) auf einer zweiten Seite des zweiten Ventilsitzes (42') angeordnet ist, die sich gegenüber dem zweiten Fluidbereich (22) befindet;
ein erstes Ventilgehäuse (38'), in dem der erste Ventilsitz (32') ausgebildet ist, und ein zweites Ventilgehäuse (48'), in dem der zweite Ventilsitz (42') ausgebildet ist, wobei der erste Ventilkörper (31') im ersten Ventilgehäuse (38') angeordnet ist und der zweite Ventilkörper (41') im zweiten Ventilgehäuse (48') angeordnet ist, und wobei das erste (38') und das zweite (48') Ventilgehäuse in den Armaturenkörper (20; 20') einsetzbar sind; und
mindestens einen Abstandshalter (60'; 62'; 64'), der zwischen dem ersten (38') und dem zweiten (48') Ventilgehäuse angeordnet ist;
wobei sich im ersten Betriebsmodus der zweite Ventilkörper (41') in der von dem zweiten Ventilsitz (42') beabstandeten offenen Position befindet und den zweiten Strömungsweg (46) zwischen dem zweiten (22) und dritten (23) Fluidbereich öffnet, und
wobei im zweiten Betriebsmodus, sobald ein Druck eines Fluids im ersten Fluidbereich (21) eine Schließkraft des elastischen Elements (34') und jegliche Druckkraft eines Fluids im zweiten Fluidbereich (22) überwindet, der erste Ventilkörper (31') in die offene Position bewegbar ist, während gleichzeitig der zweite Ventilkörper (41') in die geschlossene Position gegen den zweiten Ventilsitz (42') bewegt wird, sodass der erste Strömungsweg (36) zwischen dem ersten (21) und dem zweiten (22) Fluidbereich geöffnet wird und der zweite Strömungsweg (46) geschlossen wird, wodurch der dritte Fluidbereich (23) vom ersten (21) und vom zweiten (22) Fluidbereich isoliert wird.

11. Ventilanordnung nach Anspruch 10, wobei die funktionelle Verbindung (50; 50') eine Stange oder ein Verbindungsglied (51') ist, die oder das sich zwischen dem ersten (31') und dem zweiten (41') Ventilkörper erstreckt.

12. Ventilanordnung nach Anspruch 11, wobei der Abstandhalter (60'; 62'; 64') ein Rohr umfasst, das die Stange umgibt und an dem ersten (38') und dem zweiten (48') Ventilgehäuse befestigt ist.

13. Verfahren zum passiven Rückspülen einer Durchflusskomponente oder zum Rückspülen eines Wärmetauschers (12) eines thermischen Energiesystems, wobei das Verfahren Folgendes umfasst:
Bereitstellen einer Ventilanordnung (10; 10') zur Kommunikation mit einem ersten (21), einem zweiten (22) und einem dritten (23) Fluidbereich, die dafür ausgelegt ist, passiv zwischen einem ersten und einem zweiten Betriebsmodus umzuschalten, wobei die Ventilanordnung (10; 10') Folgendes beinhaltet: einen ersten Ventilkörper (31; 31'), der durch ein elastisches Element (34; 34') in eine geschlossene Position gegen einen ersten Ventilsitz (32; 32') vorgespannt ist, um im ersten Betriebsmodus einen ersten Strömungsweg (36) zwischen dem ersten Fluidbereich (21) und dem zweiten Fluidbereich (22) zu schließen, einen zweiten Ventilkörper (41; 41'), der gegen einen zweiten Ventilsitz (42; 42') wirkt, wobei sich der zweite Ventilkörper (41; 41') im ersten Betriebsmodus in einer vom zweiten Ventilsitz (42; 42') beabstandeten offenen Position befindet und einen zweiten Strömungsweg (46) zwischen dem zweiten (22) und dem dritten (23) Fluidbereich bereitstellt, und eine funktionelle Verbindung (50; 50') zwischen dem zweiten Ventilkörper (41; 41') und dem ersten Ventilkörper (31; 31'), sodass eine Bewegung des ersten Ventilkörpers (31; 31') in die geschlossene Position den zweiten Ventilkörper (41; 41') in die offene Position bewegt und eine Bewegung des ersten Ventilkörpers (31; 31') in eine offene Position den zweiten Ventilkörper (41; 41') in eine geschlossene Position bewegt;
Verbinden des ersten Fluidbereichs (21) mit einer Leitungswasserversorgung oder einer Druckfluidquelle;
Verbinden des zweiten Fluidbereichs (22) mit einem Einlass der Durchflusskomponente oder einem Einlass oder der kühleren Seite des Wärmetauschers (12) des thermischen Energiesystems;
Verbinden des dritten Fluidbereichs (23) mit einem Auslass der Durchflusskomponente oder einem Auslass oder der heißeren Seite des Wärmetauschers (12) des thermischen Energiesystems;
im ersten Betriebsmodus Halten des zweiten Ventilkörpers (41; 41') in der vom zweiten Ventilsitz (42; 42') beabstandeten offenen Position, wodurch ein zweiter Strömungsweg (46) zwischen dem zweiten (22) und dem dritten (23) Fluidbereich bereitgestellt wird, sodass Fluid in einer ersten Richtung durch Konvektion oder andere Mittel über den zweiten Strömungsweg (46) vom Einlass oder der kühleren Seite zum Auslass oder zur heißeren Seite strömt; und
im zweiten Betriebsmodus, sobald ein Druck eines Fluids aus der Leitungswasserversorgung oder einer anderen Druckfluidquelle im ersten Fluidbereich (21) eine Schließkraft des elastischen Elements (34; 34') und jegliche Druckkraft des Fluids im zweiten Fluidbereich (22) überwindet, Bewegen des ersten Ventilkörpers (31; 31') in die offene Position, während gleichzeitig der zweite Ventilkörper (41; 41') in die geschlossene Position gegen den zweiten Ventilsitz (42; 42') bewegt wird, sodass der erste Strömungsweg (36) zwischen dem ersten (21) und dem zweiten (22) Fluidbereich geöffnet wird und der zweite Strömungsweg (46) geschlossen wird, wodurch der dritte Fluidbereich (23) vom ersten (21) und vom zweiten (22) Fluidbereich isoliert wird und eine Strömung des Fluids aus der Leitungswasserversorgung oder einer anderen Druckfluidquelle in den zweiten Fluidbereich (22) in einer zweiten Richtung, die zur ersten Richtung entgegengesetzt ist, bereitgestellt wird.

14. Verfahren nach Anspruch 13, ferner umfassend:
Einsetzen der Ventilanordnung (10; 10') in einen Armaturenkörper (20; 20'), der den ersten (21), den zweiten (22) und den dritten (23) Bereich definiert.

15. Verfahren nach Anspruch 14, ferner umfassend das einstückige Ausbilden des ersten (32; 32') und des zweiten (42; 42') Ventilsitzes im Armaturenkörper (20; 20').

## Revendications

1. Agencement de soupape (10 ; 10') pour une communication avec des première (21), deuxième (22) et troisième (23) régions de fluide, configuré pour basculer passivement entre un premier et un deuxième mode de fonctionnement, l'agencement de soupape comprenant :
un premier corps de soupape (31') qui est sollicité par un élément résilient (34') vers une position fermée contre un premier siège de soupape (32') afin de fermer un premier chemin d'écoulement (36) entre la première région de fluide (21) et la deuxième région de fluide (22) dans le premier mode de fonctionnement ;
un deuxième corps de soupape (41') qui agit contre un deuxième siège de soupape (42'), dans le premier mode de fonctionnement, le deuxième corps de soupape (41') est dans une position ouverte, à l'écart du deuxième siège de soupape (42'), fournissant un deuxième chemin d'écoulement (46) entre les deuxième (22) et troisième (23) régions de fluide ;
une liaison fonctionnelle (50, 50') entre le deuxième corps de soupape (41') et le premier corps de soupape (31'), de telle sorte qu'un déplacement du premier corps de soupape (31') vers la position fermée déplace le deuxième corps de soupape (41') vers la position ouverte, et qu'un déplacement du premier corps de soupape (31') vers une position ouverte déplace le deuxième corps de soupape (41') vers une position fermée ; un corps de raccord (20 ; 20'), les premier (32') et deuxième (42') sièges de soupape sont insérés dans le corps de raccord (20 ; 20'), et la première région de fluide (21) étant située d'un premier côté du premier siège de soupape (32'), la deuxième région de fluide (22) étant située d'un deuxième côté du premier siège de soupape (32'), à l'opposé de la première région de fluide (21) et d'un premier côté du deuxième siège de soupape (42'), et la troisième région de fluide (23) étant située d'un deuxième côté du deuxième siège de soupape (42'), à l'opposé de la deuxième région de fluide (22) ; un premier logement de soupape (38') dans lequel est formé le premier siège de soupape (32'), et un deuxième logement de soupape (48') dans lequel est formé le deuxième siège de soupape (42'), le premier corps de soupape (31') se situe dans le premier logement de soupape (38') et le deuxième corps de soupape (41') se situe dans le deuxième logement de soupape (48'), et les premier (38') et deuxième (48') logements de soupape peuvent être insérés dans le corps de raccord (20 ; 20') ; et
un premier joint d'étanchéité (37') entre le premier logement de soupape (38') et une paroi de passage du corps de raccord (20 ; 20'), et un deuxième joint d'étanchéité (47') entre le deuxième logement de soupape (48') et la paroi de passage du corps de raccord (20 ; 20'),
dans lequel, dans le premier mode de fonctionnement, le deuxième corps de soupape (41') est dans la position ouverte, à l'écart du deuxième siège de soupape (42'), ouvrant le deuxième chemin d'écoulement (46) entre les deuxième (22) et troisième (23) régions de fluide, et
dans le deuxième mode de fonctionnement, lorsqu'une pression d'un fluide dans la première région de fluide (21) l'emporte sur une force de fermeture de l'élément résilient (34') et toute force de pression d'un fluide dans la deuxième région de fluide (22), le premier corps de soupape (31') peut être déplacé vers la position ouverte tout en déplaçant simultanément le deuxième corps de soupape (41') vers la position fermée contre le deuxième siège de soupape (42'), de telle sorte que le premier chemin d'écoulement (36) s'ouvre entre les première (21) et deuxième (22) régions de fluide et que le deuxième chemin d'écoulement (46) se ferme, isolant ainsi la troisième région de fluide (23) des première (21) et deuxième (22) régions de fluide.

2. Agencement de soupape selon la revendication 1, dans lequel, lorsque la force résiliente et toute force de pression dans la deuxième région de fluide l'emportent sur la pression du fluide dans la première région de fluide, l'agencement de soupape est configuré pour revenir au premier mode de fonctionnement.

3. Agencement de soupape selon la revendication 1, dans lequel l'élément résilient (34') est un ressort et/ou se situe dans le premier logement de soupape (38').

4. Agencement de soupape selon la revendication 1, dans lequel la liaison fonctionnelle (50 ; 50') est un lien mécanique (51'), un couplage magnétique ou une liaison hydraulique ou pneumatique.

5. Agencement de soupape selon la revendication 1, dans lequel la liaison fonctionnelle (50 ; 50') comprend un organe rigide s'étendant entre les premier et deuxième corps de soupape.

6. Agencement de soupape selon la revendication 5, dans lequel la liaison fonctionnelle (50 ; 50') est une tige ou un lien qui s'étend entre les premier (31') et deuxième (41') corps de soupape.

7. Agencement de soupape selon la revendication 6, dans lequel une longueur de la tige est réglable.

8. Agencement de soupape selon la revendication 6, comprenant en outre un support d'élément résilient situé dans le corps de raccord (20 ; 20'), et l'élément résilient (34') est agencé entre le support d'élément résilient et le premier corps de soupape (31').

9. Agencement de soupape selon la revendication 1, dans lequel le corps de raccord (20 ; 20') est en forme de T, et les premier (32') et deuxième (42') sièges de soupape se situent suivant un même axe dans un passage principal traversant le T, et un passage transversal du T coupe le passage principal en un emplacement situé entre les premier (32') et deuxième (42') sièges de soupape.

10. Agencement de soupape (10 ; 10') pour une communication avec des première (21), deuxième (22) et troisième (23) régions de fluide, qui est configuré pour basculer passivement entre un premier et un deuxième mode de fonctionnement, l'agencement de soupape comprenant :
un premier corps de soupape (31') qui est sollicité par un élément résilient (34') vers une position fermée contre un premier siège de soupape (32') afin de fermer un premier chemin d'écoulement (36) entre la première région de fluide (21) et la deuxième région de fluide (22) dans le premier mode de fonctionnement ;
un deuxième corps de soupape (41') qui agit contre un deuxième siège de soupape (42') ; dans le premier mode de fonctionnement, le deuxième corps de soupape (41') se trouve dans une position ouverte, à l'écart du deuxième siège de soupape (42'), fournissant un deuxième chemin d'écoulement (46) entre les deuxième (22) et troisième (23) régions de fluide ;
une liaison fonctionnelle (50 ; 50') entre le deuxième corps de soupape (41') et le premier corps de soupape (31'), de telle sorte qu'un déplacement du premier corps de soupape (31') vers la position fermée déplace le deuxième corps de soupape (41') vers la position ouverte, et qu'un déplacement du premier corps de soupape (31') vers une position ouverte déplace le deuxième corps de soupape (41') vers une position fermée ; un corps de raccord (20 ; 20'), les premier (32') et deuxième sièges de soupape sont insérés dans le corps de raccord, et la première région de fluide (21) étant située d'un premier côté du premier siège de soupape (32'), la deuxième région de fluide (22) étant située d'un deuxième côté du premier siège de soupape (32'), à l'opposé de la première région de fluide (21) et d'un premier côté du deuxième siège de soupape (42'), et la troisième région de fluide étant située d'un deuxième côté du deuxième siège de soupape (42'), à l'opposé de la deuxième région de fluide (22) ;
un premier logement de soupape (38') dans lequel est formé le premier siège de soupape (32'), et un deuxième logement de soupape (48') dans lequel est formé le deuxième siège de soupape (42'), le premier corps de soupape (31') se situe dans le premier logement de soupape (38') et le deuxième corps de soupape (41') se situe dans le deuxième logement de soupape (48'), et
les premier (38') et deuxième (48') logements de soupape peuvent être insérés dans le corps de raccord (20 ; 20') ; et
au moins une entretoise (60' ; 62' ; 64') située entre les premier (38') et deuxième (48') logements de soupape ;
dans lequel, dans le premier mode de fonctionnement, le deuxième corps de soupape (41') est dans la position ouverte, à l'écart du deuxième siège de soupape (42'), ouvrant le deuxième chemin d'écoulement (46) entre les deuxième (22) et troisième (23) régions de fluide, et
dans le deuxième mode de fonctionnement, lorsqu'une pression d'un fluide dans la première région de fluide (21) l'emporte sur une force de fermeture de l'élément résilient (34') et toute force de pression d'un fluide dans la deuxième région de fluide (22), le premier corps de soupape (31') peut être déplacé vers la position ouverte tout en déplaçant simultanément le deuxième corps de soupape (41') vers la position fermée contre le deuxième siège de soupape (42'), de telle sorte que le premier chemin d'écoulement (36) s'ouvre entre les première (21) et deuxième (22) régions de fluide et le deuxième chemin d'écoulement (46) se ferme, isolant la troisième région de fluide (23) des première (21) et deuxième (22) régions de fluide.

11. Agencement de soupape selon la revendication 10, dans lequel la liaison fonctionnelle (50 ; 50') est une tige ou un lien (51') qui s'étend entre les premier (31') et deuxième (41') corps de soupape.

12. Agencement de soupape selon la revendication 11, dans lequel l'entretoise (60' ; 62' ; 64') comprend un tube qui entoure la tige et qui est fixé aux premier (38') et deuxième (48') logements de soupape.

13. Procédé de lavage à contre-courant passif d'un composant d'écoulement ou de lavage à contre-courant d'un échangeur de chaleur (12) d'un système d'énergie thermique, le procédé comprenant :
la fourniture d'un agencement de soupape (10 ; 10') pour communication avec des première (21), deuxième (22) et troisième (23) régions de fluide, qui est configuré pour basculer passivement entre un premier et un deuxième mode de fonctionnement, l'agencement de soupape (10 ; 10') comportant un premier corps de soupape (31 ; 31') qui est sollicité par un élément résilient (34 ; 34') vers une position fermée contre un premier siège de soupape (32 ; 32') afin de fermer un premier chemin d'écoulement (36) entre la première région de fluide (21) et la deuxième région de fluide (22) dans le premier mode de fonctionnement, un deuxième corps de soupape (41 ; 41') qui agit contre un deuxième siège de soupape (42 ; 42'), dans le premier mode de fonctionnement, le deuxième corps de soupape (41 ; 41') est dans une position ouverte, à l'écart du deuxième siège de soupape (42 ; 42'), fournissant un deuxième chemin d'écoulement (46) entre les deuxième (22) et troisième (23) régions de fluide, et une liaison fonctionnelle (50 ; 50') entre le deuxième corps de soupape (41 ; 41') et le premier corps de soupape (31 ; 31'), de telle sorte qu'un déplacement du premier corps de soupape (31 ; 31') vers la position fermée déplace le deuxième corps de soupape (41 ; 41') vers la position ouverte, et qu'un déplacement du premier corps de soupape (31 ; 31') vers une position ouverte déplace le deuxième corps de soupape (41 ; 41') vers une position fermée ;
la liaison de la première région de fluide (21) à un réseau d'alimentation en eau ou à une source de fluide sous pression ;
la liaison de la deuxième région de fluide (22) à une entrée du composant d'écoulement ou à une entrée ou au côté plus froid de l'échangeur de chaleur (12) du système d'énergie thermique ;
la liaison de la troisième région de fluide (23) à une sortie du composant d'écoulement ou à une sortie du côté plus chaud de l'échangeur de chaleur (12) du système d'énergie thermique ;
dans le premier mode de fonctionnement, la tenue du deuxième corps de soupape (41 ; 41') dans la position ouverte, à l'écart du deuxième siège de soupape (42 ; 42'), fournissant un deuxième chemin d'écoulement (46) entre les deuxième (22) et troisième (23) régions de fluide, de telle sorte que le fluide s'écoule dans un premier sens, de l'entrée ou du côté plus froid vers la sortie ou le côté plus chaud, via le deuxième chemin d'écoulement (46), par convection ou d'autres moyens ; et
dans le deuxième mode de fonctionnement, lorsqu'une pression d'un fluide provenant du réseau d'alimentation en eau ou d'une autre source de fluide sous pression dans la première région de fluide (21) l'emporte sur une force de fermeture de l'élément résilient (34 ; 34') et toute force de pression du fluide dans la deuxième région de fluide (22), le déplacement du premier corps de soupape (31 ; 31') vers la position ouverte tout en déplaçant simultanément le deuxième corps de soupape (41 ; 41') vers la position fermée contre le deuxième siège de soupape (42 ; 42'), de telle sorte que le premier chemin d'écoulement (36) s'ouvre entre les première (21) et deuxième (22) régions de fluide et que le deuxième chemin d'écoulement (46) se ferme, isolant la troisième région de fluide (23) des première (21) et deuxième (22) régions de fluide et fournissant un écoulement du fluide provenant du réseau d'alimentation en eau ou d'une autre source de fluide sous pression dans la deuxième région de fluide (22) dans un deuxième sens, opposé au premier sens.

14. Procédé selon la revendication 13, comprenant en outre :
l'insertion de l'agencement de soupape (10 ; 10') dans un corps de raccord (20 ; 20') qui définit les première (21), deuxième (22) et troisième (23) régions.

15. Procédé selon la revendication 14, comprenant en outre la formation d'un seul tenant des premier (32 ; 32') et deuxième *(*42 ; 42') sièges de soupape dans le corps de raccord (20 ; 20').
